# EUROPEAN PATENT APPLICATION

(11) **EP 1 863 207 A1**
(43) Date of publication of application: **05.12.2007**
(21) Application number: 07010686.9
(22) Date of filing: 30.05.2007
(51) Int. Cl.: H04J 14/02

(54) **System and method for protecting an optical network**

(30) Priority: 02.06.2006 US 803796 P; 28.02.2007 US 680186
(71) Applicant: Fujitsu Ltd., Kawasaki-shi, Kanagawa 211-8588 (JP)
(72) Inventor: Bouda, Martin, Plano, Texas 75093 (US); Naito, Takao, Plano, Texas 75024 (US); Akasaka, Youichi, Allen, Texas 75013 (US)
(74) Representative: HOFFMANN EITLE

(57) **Abstract**

In accordance with the teachings of the present invention, a method for distributing traffic in a distribution node in an optical network includes receiving wavelength division multiplexed (WDM) traffic in a plurality of wavelengths at at least one of a plurality of filters at the distribution node from at least one of the one or more upstream terminals. The optical network includes one or more upstream terminals, the distribution node, and a plurality of downstream terminals. Each of the filters is coupled to one or more of the upstream terminals by a plurality of separate fibers. The method further includes separating traffic in a first set of one or more wavelengths from traffic in a second set of one or more wavelengths at the filter. The method further includes routing the traffic in the first set of wavelengths for distribution to all downstream terminals. The method further includes routing the traffic in each wavelength of the second set of wavelengths for distribution to a particular subset of the downstream terminals.

## Description

### CROSS REFERENCE TO RELATED APPLICATION

This application claims the benefit under 35 U.S.C. § 119(e) of U.S. Provisional Application No. 60/803,796 filed June 2, 2006 entitled "System and Method for Managing Power in an Optical Network."

### TECHNICAL FIELD

The present invention relates generally to communication systems and, more particularly, to a system and method for protecting an optical network.

### BACKGROUND

In recent years, a bottlenecking of communication networks has occurred in the portion of the network known as the access network. Bandwidth on longhaul optical networks has increased sharply through new technologies such as wavelength division multiplexing (WDM) and transmission of traffic at greater bit rates. Metropolitan-area networks have also seen a dramatic increase in bandwidth. However, the access network, also known as the last mile of the communications infrastructure connecting a carrier's central office to a residential or commercial customer site, has not seen as great of an increase in affordable bandwidth. The access network thus presently acts as the bottleneck of communication networks, such as the internet.

Power-splitting passive optical networks (PSPONs) offer one solution to the bottleneck issue. PSPONs refer to typical access networks in which an optical line terminal (OLT) at the carrier's central office transmits traffic over one or two downstream wavelengths for broadcast to optical network units (ONUs). In the upstream direction, ONUs typically time-share transmission of traffic in one wavelength. An ONU refers to a form of access node that converts optical signals transmitted via fiber to electrical signals that can be transmitted to individual subscribers and vice versa. PSPONs address the bottleneck issue by providing greater bandwidth at the access network than typical access networks. For example, networks such as digital subscriber line (DSL) networks that transmit traffic over copper telephone wires typically transmit at a rate between approximately 144 kilobits per second (Kb/s) and 1.5 megabits per second (Mb/s). Conversely, Broadband PONs (BPONs), which are example PSPONs, are currently being deployed to provide hundreds of megabits per second capacity shared by thirty-two users. Gigabit PONs (GPONs), another example of a PSPON, typically operate at speeds of up to 2.5 gigabits per second (Gb/s) by using more powerful transmitters, providing even greater bandwidth. Other PSPONs include, for example, asynchronous transfer mode PONs (APONs) and gigabit Ethernet PONs (GEPONs).

Although PSPON systems provide increased bandwidth in access networks, demand continues to grow for higher bandwidth. One solution, wavelength division multiplexing PON (WDMPON), would increase downstream (and upstream) capacity dramatically but inefficiently. WDMPONs refer to access networks in which each ONU receives and transmits traffic over a dedicated downstream and upstream wavelength, respectively. Although WDMPONs would increase capacity dramatically, they would do so at a prohibitively high cost for many operators and would supply capacity far exceeding current or near-future demand. Hybrid PON (HPON) fixes this problem by offering a simple and efficient upgrade from existing PSPONs that may easily and efficiently be upgraded (to, for example, a WDMPON). An HPON provides greater downstream capacity cost-efficiently by having groups of two or more ONUs share downstream WDM wavelengths. An HPON may include both an HPON that transmits downstream traffic in a plurality of wavelengths each shared by a group of wavelength-sharing ONUs (a WS-HPON) and an HPON that transmits downstream traffic in a unique wavelength for each ONU (retaining PSPON characteristics in the upstream direction).

Although HPONs may offer much greater bandwidth than typical access networks such as DSL networks, they are not protected from failures in the OLT and optical fiber. Therefore, if one of these elements fails, the systems cannot communicate traffic (at least in part) until the failure is corrected. Furthermore, even when the HPONs are protected from failure, the added optical components protecting the HPONs cause a reduction in optical signal power levels at receiving ends, limiting the maximum transmission distance. Therefore, because demand for greater capacity continues to grow, a need exists for cost-efficient solutions for protecting HPONs from a failure in one or more elements without a significant loss in optical power.

### SUMMARY

In accordance with the teachings of the present invention, a method for distributing traffic in a distribution node in an optical network includes receiving wavelength division multiplexed (WDM) traffic in a plurality of wavelengths at at least one of a plurality of filters at the distribution node from at least one of the one or more upstream terminals. The optical network includes one or more upstream terminals, the distribution node, and a plurality of downstream terminals. Each of the filters is coupled to one or more of the upstream terminals by a plurality of separate fibers. The method further includes separating traffic in a first set of one or more wavelengths from traffic in a second set of one or more wavelengths at the filter. The method further includes routing the traffic in the first set of wavelengths for distribution to all downstream terminals. The method further includes routing the traffic in each wavelength of the second set of wavelengths for distribution to a particular subset of the downstream terminals.

In accordance with further teachings of the present invention, a method for distributing traffic in a distribution node in an optical network includes receiving wavelength division multiplexed (WDM) traffic in a plurality of wavelengths at a switch at the distribution node from at least one of the one or more upstream terminals. The optical network includes one or more upstream terminals, the distribution node, and a plurality of downstream terminals. The switch is coupled to the one or more upstream terminals by a plurality of separate fibers. The method further includes selecting WDM traffic from one of the fibers to be forwarded to a filter. The method further includes separating traffic in a first set of one or more wavelengths from traffic in a second set of one or more wavelengths at the filter. The method further includes routing the traffic in the first set of wavelengths for distribution to all downstream terminals. The method further includes routing the traffic in each wavelength of the second set of wavelengths for distribution to a particular subset of the downstream terminals.

Certain embodiments of the invention may provide one or more technical advantages. A technical advantage of one embodiment may be that using alternative components in the distribution node eliminates the need for an initial coupler to split a downstream signal that includes broadcast traffic. As a result, the broadcast traffic is subjected to a lower power loss. Such a reduced power loss may be advantageous since the broadcast traffic must undergo splitting at the distribution node for communication to the ONUs. Therefore, this traffic has a limited power budget.

It will be understood that the various embodiments of the present invention may include some, all, or none of the enumerated technical advantages. In addition other technical advantages of the present invention may be readily apparent to one skilled in the art from the figures, description, and claims included herein.

### BRIEF DESCRIPTION OF THE DRAWINGS

For a more complete understanding of the present invention and its features and advantages, reference is now made to the following description, taken in conjunction with the accompanying drawings, in which:
FIGURE 1 is a diagram illustrating an example PSPON;
FIGURE 2 is a diagram illustrating an example HPON;
FIGURES 3A-3C are diagrams illustrating example alternative transmission components for the HPON of FIGURE 2;
FIGURE 4A is a diagram illustrating a conventional RN that may be used as part of the transmission components of FIGURES 3A, 3B, and 3C; and
FIGURES 4B-4D are diagrams illustrating example alternative RNs according to particular embodiments of the present invention.

### DETAILED DESCRIPTION

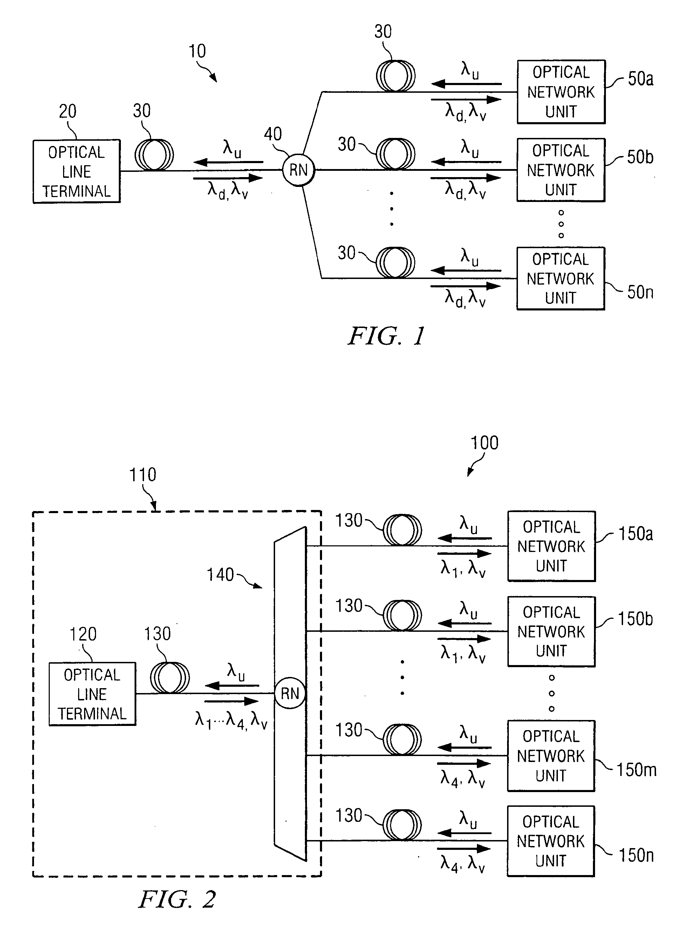

FIGURE 1 is a diagram illustrating an example Power Splitting Passive Optical Network (PSPON) 10. Typically, PSPONs have been employed to address the bottlenecking of communications networks in the portion of the network known as the access network. In recent years, bandwidth on longhaul optical networks has increased sharply through new technologies such as wavelength division multiplexing (WDM) and transmission of traffic at greater bit rates. In addition, metropolitan-area networks have also seen a dramatic increase in bandwidth. However, the access network, also known as the last mile of the communications infrastructure connecting a carrier's central office to a residential or commercial customer site, has not seen as great of an increase in affordable bandwidth. The access network thus presently acts as the bottleneck of communication networks, such as the internet.

PSPONs address the bottleneck issue by providing greater bandwidth at the access network than typical access networks. For example, networks such as digital subscriber line (DSL) networks that transmit traffic over copper telephone wires typically transmit at a rate between approximately 144 kilobits per second (Kb/s) and 1.5 megabits per second (Mb/s). Conversely, broadband PONs (BPONs) are currently being deployed to provide hundreds of megabits per second capacity shared by thirty-two users. Gigabit PONs (GPONs), which typically operate at speeds of up to 2.5 gigabits per second (Gb/s) by using more powerful transmitters, provide even greater bandwidth.

Referring back to PSPON 10 of FIGURE 1, PSPON 10 includes an Optical Line Terminal (OLT) 20, optical fiber 30, a Remote Node (RN) 40, and Optical Network Units (ONUs) 50. PSPON 10 refers to typical access networks in which an optical line terminal (OLT) at the carrier's central office transmits traffic over one or two downstream wavelengths for broadcast to optical network units (ONUs). PSPON 10 may be an asynchronous transfer mode PON (APON), a BPON, a GPON, a gigabit Ethernet PON (GEPON), or any other suitable PSPON. A feature common to all PSPONs 10 is that the outside fiber plant is completely passive. Downstream signals transmitted by the OLT are passively distributed by the RN to downstream ONUs coupled to the RN through branches of fiber, where each ONU is coupled to the end of a particular branch. Upstream signals transmitted by the ONUs are also passively forwarded to the OLT by the RN.

OLT 20, which may be an example of an upstream terminal, may reside at the carrier's central office, where it may be coupled to a larger communication network. OLT 20 includes a transmitter operable to transmit traffic in a downstream wavelength, such as λ_{d}, for broadcast to all ONUs 50, which may reside at or near customer sites. OLT 20 may also include a transmitter operable to transmit traffic in a second downstream wavelength λᵥ (which may be added to λ_{d}) for broadcast to all ONUs 50. As an example, in typical GPONs, λᵥ may carry analog video traffic. Alternatively, λᵥ may carry digital data traffic. OLT 20 also includes a receiver operable to receive traffic from all ONUs 50 in a time-shared upstream wavelength, λᵤ. In typical PSPONs, downstream traffic in λ_{d} and λᵥ is transmitted at a greater bit rate than is traffic in λᵤ, as PSPONs typically provide lower upstream bandwidth than downstream bandwidth. It should be noted that "downstream" traffic refers to traffic traveling in the direction from the OLT (or upstream terminal) to the ONUs (or downstream terminals), and "upstream" traffic refers to traffic traveling in the direction from the ONUs (or downstream terminals) to the OLT (or upstream terminal). It should further be noted that λ_{d} may include the band centered around 1490mn, λᵥ may include the band centered around 1550nm, and λᵤ may include the band centered around 1311nm in particular PSPONs.

Optical fiber 30 may include any suitable fiber to carry upstream and downstream traffic. In certain PSPONs 10, optical fiber 30 may comprise, for example, bidirectional optical fiber. In other PSPONs 10, optical fiber 30 may comprise two distinct fibers. RN 40 of PSPON 10 (which may also generally be referred to as a distribution node) comprises any suitable power splitter, such as an optical coupler, and connects OLT 20 to ONUs 50. RN 40 is located in any suitable location and is operable to split a downstream signal such that each ONU 50 receives a copy of the downstream signal. Due to the split and other possible power losses, each copy forwarded to an ONU has less than 1/N of the power of the downstream signal received by RN 40, where N refers to the number of ONUs 50. In addition to splitting downstream signals, RN 40 is also operable to combine into one signal upstream, time-shared signals transmitted by ONUs 50. RN 40 is operable to forward the upstream signal to OLT 20.

ONUs 50 (which may be examples of downstream terminals) may include any suitable optical network unit or optical network terminal (ONT) and generally refer to a form of access node that converts optical signals transmitted via fiber to electrical signals that can be transmitted to individual subscribers. Subscribers may include residential and/or commercial customers. Typically, PONs 10 have thirty-two ONUs 50 per OLT 20, and thus, many example PONs may be described as including this number of ONUs. However, any suitable number of ONUs per OLT may be provided. ONUs 50 may include triplexers that comprise two receivers to receive downstream traffic (one for traffic in λ_{d} and the other for traffic in λᵥ) and one transmitter to transmit upstream traffic in λᵤ. The transmission rate of the ONU transmitter is typically less than the transmission rate of the OLT transmitter (due to less demand for upstream capacity than for downstream capacity). Each ONU 50 is operable to process its designated downstream traffic and to transmit upstream traffic according to an appropriate time-sharing protocol (such that the traffic transmitted by one ONU in λᵤ does not collide with the traffic of other ONUs in λᵤ).

In operation, the OLT 20 of a typical PSPON 10 transmits downstream traffic destined for one or more of ONUs 50 in λ_{d}. OLT 20 may also transmit downstream analog video traffic for broadcast to ONUs 50 in λᵥ. Traffic in wavelengths λ_{d} and λᵥ is combined at OLT 20 and travels over optical fiber 30 to RN 40. RN 40 splits the downstream traffic into a suitable number of copies and forwards each copy to a corresponding ONU. Each ONU receives a copy of the downstream traffic in λ_{d} and λᵥ and processes the signal. Suitable addressing schemes may be used to identify which traffic is destined for which ONU 50. Each ONU 50 may also transmit upstream traffic in λᵤ along fiber 30 according to a suitable time-sharing protocol (such that upstream traffic does not collide). RN 40 receives the upstream traffic from each ONU 50 and combines the traffic from each ONU 50 into one signal. RN 40 forwards the signal over fiber 30 to OLT 20. OLT 20 receives the signal and processes it.

Although PSPONs may offer much greater bandwidth than typical access networks such as DSL networks, bandwidth requirements are projected to exceed even the increased capacity offered by typical PSPONs. For example, some streaming video and online gaming applications presently require bit rates of approximately one to ten Mb/s, and some IP high definition television and video-on-demand systems presently require bit rates of approximately twenty Mb/s. Future demands for bandwidth are projected to be even greater. Thus, a need exists for a hybrid PON (HPON) that offers a simple and efficient upgrade from existing PSPONs and that may easily and efficiently be upgraded (to, for example, a WDMPON).

FIGURE 2 is a diagram illustrating an example HPON 100. Example HPON 100, a hybrid between a PSPON and a WDMPON, provides a cost-efficient upgrade solution for many network operators. Example HPON 100 provides greater downstream capacity cost-efficiently by having groups of two or more ONUs 150 share downstream WDM wavelengths. It should be noted that an HPON generally refers to any suitable PON that is not a full WDMPON but that is operable to route downstream traffic in particular wavelengths to particular ONUs (and to transmit upstream traffic in any suitable manner). An HPON may include both an HPON that transmits downstream traffic in a plurality of wavelengths each shared by a group of wavelength-sharing ONUs (a WS-HPON) and an HPON that transmits downstream traffic in a unique wavelength for each ONU (retaining PSPON characteristics in the upstream direction).

In the illustrated example, ONUs 150a-150n may share λ₁-λ₄. Traffic in λᵥ is broadcast to all ONUs. It should be noted that any suitable number of ONUs may be associated with one OLT. Additionally, any suitable number of ONUs may share one or more wavelengths in a WS-HPON. Using shared wavelengths in a WS-HPON permits the use of less costly optics components than in, for example, WDMPON. For example, sharing downstream wavelengths in HPON 100 reduces the cost and stability requirements of the multiplexer and transmitter/receiver components in the network. Due to the sharing of wavelengths, the spacing between WDM wavelengths may be increased to relax the specifications of wavelength selective elements and to relax the requirements for transmitter wavelength stability and temperature stability of passive components. By using less expensive components to provide a desired increase in downstream bandwidth, HPON 100 is a much more attractive upgrade solution for many network operators than WDMPON.

Example HPON 100 comprises components 110 and ONUs 150. Components 110 include OLT 120, optical fiber 130, and RN 140. OLT 120 of HPON 100 (which may be an example of an upstream terminal) may reside at the carrier's central office and comprises four transmitters operable to transmit downstream traffic over λ₁-λ₄, which are to be shared by groups of ONUs 150. OLT 120 may also comprise an additional transmitter operable to transmit an analog video signal in λᵥ for broadcast to all ONUs 150. OLT 120 may also comprise a multiplexer operable to multiplex the wavelengths transmitted by the transmitters of OLT 120. OLT 120 may also comprise a receiver operable to receive upstream traffic in wavelength λᵤ, which is time-shared by ONUs 150. It should be noted that although the illustrated embodiment shows only four downstream wavelengths to be shared by ONUs 150, any suitable number of downstream wavelengths may be transmitted at OLT 120 and shared by groups of ONUs 150. In addition, any suitable number of downstream wavelengths may be transmitted at OLT 120 and the traffic in these wavelengths broadcast to all ONUs 150 (and not just the traffic in λᵥ, as illustrated). It should be further noted that traffic in any suitable number of upstream wavelengths may be received at OLT 120 (including traffic in multiple sub-bands of the GPON one hundred nanometer upstream band) and an upstream wavelength need not be time-shared by all ONUs (for example, a separate upstream wavelength may be time-shared by each group of downstream, wavelength-sharing ONUs).

Optical fiber 130 may comprise any suitable fiber to carry upstream and downstream traffic. In certain HPONs 100, optical fiber 130 may comprise, for example, bidirectional fiber. In other HPONs 100, optical fiber 130 may comprise two distinct fibers.

RN 140 of HPON 100 may comprise a multiplexer and a power splitter. The multiplexer is operable to demultiplex downstream wavelengths λ₁-λ₄ and forward traffic in each of these wavelengths to a corresponding group of wavelength-sharing ONUs 150. The power splitter is operable to receive and split traffic in downstream wavelength λᵥ (if applicable) for broadcast to all ONUs 150. With regard to upstream traffic, the power splitter of RN 140 is also operable to receive and combine traffic in time-shared λᵤ from ONUs 150 into one signal. RN 140 is further operable to forward the upstream signal to OLT 120. It should be noted that although RN 140 is referred to as a remote node, "remote" refers to RN 140 being communicatively coupled to OLT 120 and ONUs 150 in any suitable spatial arrangement. A remote node may also generally be referred to as a distribution node.

ONUs 150 (which may be examples of downstream terminals) may comprise any suitable optical network unit or ONT and may serve residential and/or commercial customers. There may be any suitable number of ONUs. Each ONU 150 may comprise one receiver to receive traffic over a shared wavelength, one of λ₁-λ₄, and one receiver to receive traffic over λᵥ (if applicable). Each ONU 150 may also comprise one transmitter to transmit upstream traffic over time-shared λᵤ. Each ONU 150 may thus comprise a triplexer.

In operation, the transmitters in OLT 120 transmit downstream traffic over λ₁-λ₄, which are to be shared by groups of ONUs 150, and (in certain cases) one transmitter in OLT 120 transmits downstream traffic to be broadcast to all ONUs 150 over λᵥ. Traffic in wavelengths λ₁-λ₄ and λᵥ is multiplexed at OLT 120 into one signal, and the signal travels over optical fiber 130 to RN 140. RN 140 filters the traffic in λᵥ out of the signal and forwards the traffic to the power splitter where it is split for broadcast to all ONUs 150. At the multiplexer, RN 140 demultiplexes the signal comprising the traffic in the remaining wavelengths (λ₁-λ₄) and forwards the traffic in each wavelength, one of λ₁-λ₄, to its corresponding group of wavelength-sharing ONUs 150. Each ONU 150 receives traffic over one or more of the wavelengths that it shares with other ONUs 150 and processes the traffic (according to a suitable protocol). Each ONU 150 may also receive and process traffic over λᵥ. In the upstream direction, each ONU 150 time-shares use of λᵤ according to a suitable protocol. RN 140 receives upstream traffic carried over time-shared λᵤ from each of the ONUs 150 and combines the traffic into one signal using the power splitter. RN 140 forwards the combined signal over fiber 130 to OLT 120. OLT 120 receives the signal at its receiver and processes the traffic.

Although HPONs may offer much greater bandwidth than typical access networks such as DSL networks, the HPONs described above are not protected from failures in the OLT and optical fiber. Therefore, if one of these elements fails, the HPON systems cannot communicate traffic (at least in part) until the failure is corrected. To solve this problem, a protection system may be put in place to provide traffic protection when the first system fails. As a result, traffic in the PON is protected.

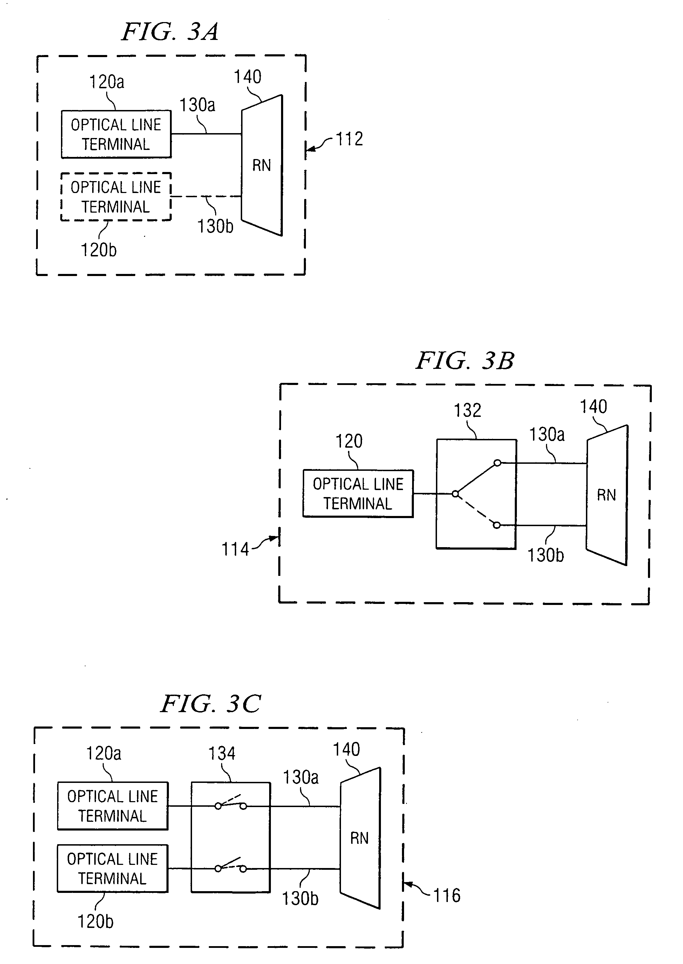

FIGURE 3A is a diagram illustrating example alternative transmission components for HPON 100. Transmission components 112 provide redundant protective elements for HPON 100 that allow traffic to be communicated to RN 140 through either optical fiber 130a or 130b. Transmission components 112 include a primary OLT 120a, and also include a redundant OLT 120b that may communicate traffic when the primary OLT 120a fails.

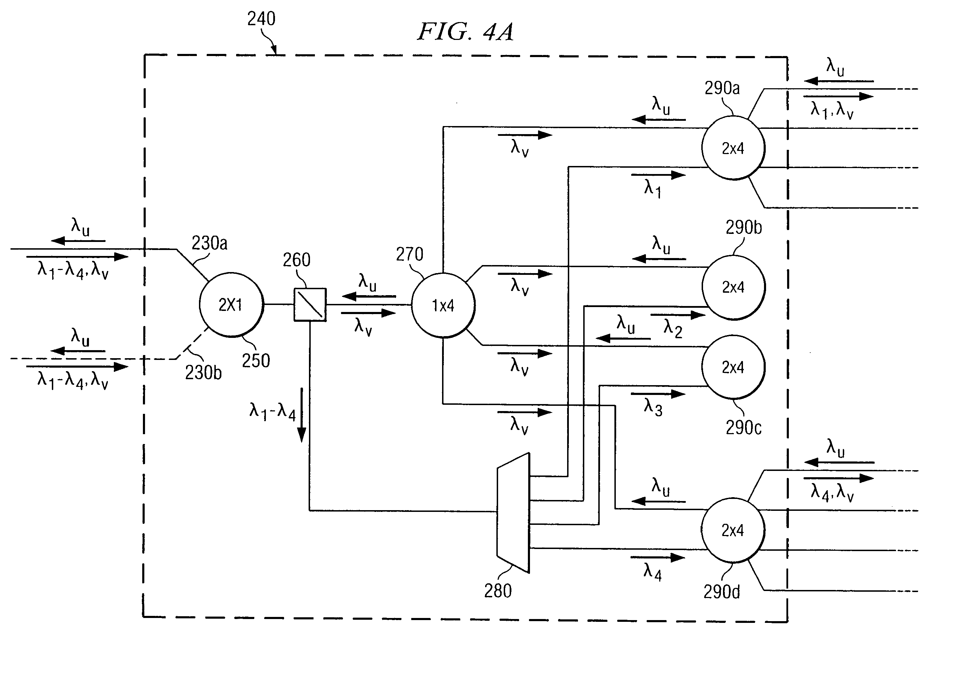

In this configuration, only one OLT is active at one time, and thus redundant OLT 120b is kept in cold standby until primary redundant OLT 120a fails. While in cold standby, redundant OLT 120b does not transmit traffic (as indicated by the dashed lines). This prevents redundant OLT 120b from transmitting traffic that is already being transmitted by primary OLT 120a. When a failure occurs in primary OLT 120a, redundant OLT 120b warms up, and then ranges and discovers each ONU before transmitting traffic. Therefore, when using components 112, OLTs 120 are coupled to RN 140 using two separate fibers, but traffic is received at RN 140 over only one fiber at any given time. As described below in FIGURES 4A-4D, RN 140 is configured to appropriately distribute the traffic received over either fiber 130a or 130b.

FIGURE 3B is a diagram illustrating example alternative transmission components for HPON 100. Transmission components 114 provide redundant fibers for HPON 100 that allow traffic to be communicated to RN 140 through either optical fiber 130a or 130b. Transmission components 114 include a fiber switch 132 that designates which optical fiber 130 is used to transmit traffic to RN 140.

Fiber switch 132 may include any suitable switch operable to alternatively switch traffic to either optical fibers 130a and 130b so that only one communicates traffic to RN 140 at a time. According to the illustrated embodiment, switch 132 receives traffic from OLT 120 and determines which optical fiber 130 will communicate the traffic to RN 140. Thus, if optical fiber 130a fails, switch 132 can direct the traffic from OLT 120 on optical fiber 130b instead of optical fiber 130a (and vice versa). This allows traffic to be transmitted by optical fiber 130b immediately after discovering that optical fiber 130a has failed, or vice versa. Thus, as with the components of FIGURE 3A, RN 140 is configured to receive and distribute traffic from either fiber 130a or fiber 130b.

FIGURE 3C is a diagram illustrating example alternative transmission components for HPON 100. Transmission components 116 provide redundant protective elements for HPON 100 that allow traffic to be communicated to RN 140 through either optical fiber 130a or 130b. Transmission components 116 include a primary OLT 120a and a redundant OLT 120b that each transmit the same downstream traffic to a fiber switch 134. Fiber switch 134 designates which copy of the downstream traffic is transmitted to RN 140, preventing two copies of identical traffic from being transmitted to RN 140.

Fiber switch 134 may include any suitable switch operable to alternatively open and close optical fibers 130a and 130b so that only one is capable of communicating traffic through the switch at a time. According to the illustrated embodiment, switch 134 allows both OLTs 120a and 120b to be active at the same time (since traffic communicated from one of the OLTs is terminated at switch 134). This allows traffic to be transmitted by redundant OLT 120b immediately after discovering that OLT 120a has failed, or vice versa. Since OLT 120a is already active, and not in cold standby such as in some conventional systems, bandwidth is available to the subscriber without having to wait for OLT 120b to warm up and then discover and range each ONU. As a result, fiber switch 134 eliminates the need to place OLT 120b in cold standby to prevent it from transmitting traffic that is already being handled by OLT 120a.

In another embodiment, redundant OLT 120b may be kept in cold standby. Therefore, when primary OLT 120a fails, OLT 120b warms up to transmit traffic, and switch 134 closes optical fiber 130b to allow the traffic to be communicated to RN 140 via both redundant OLT 120b and optical fiber 130b.

As seen above in FIGURES 3A, 3B, and 3C, protecting HPONs from failures in the OLT and optical fiber, requires at least two separate optical fibers connected to the RN. As a result, the RN must have a plurality of inputs for receiving downstream traffic. Therefore, the RN must be capable of demultiplexing and/or power splitting traffic received at each input for distribution to appropriate ONUs. Conventionally, the plurality of inputs are combined into one single input, and the traffic from the one input is demultiplexed and power split, as is illustrated in FIGURE 4A.

FIGURE 4A is a diagram illustrating a conventional RN 240 that may be used as part of the transmission components of FIGURES 3A, 3B, and 3C. RN 240 includes an initial coupler 250 for combing a plurality of downstream inputs into one input of downstream traffic (although, as noted above, only one of these downstream inputs has active traffic at any one time). Therefore, coupler 250 allows RN 240 to demultiplex and/or power split the traffic received at any of the plurality of inputs. RN 240 also includes filter 260, primary coupler 270, multiplexer 280, and secondary couplers 290. RN 240 is operable to receive the traffic in λ₁-λ₄, and demultiplex and forward the traffic in each wavelength to a corresponding group of wavelength-sharing ONUs. RN 240 is further operable to receive the traffic in λᵥ or other suitable broadcast traffic from OLT 120a or 120b, and filter out and broadcast the traffic in λᵥ to each ONU. RN 240 is further operable to receive from ONUs upstream signals carried over a time-shared wavelength (such as λᵤ), combine these signals, and forward the combined traffic in λᵤ to OLTs 120. Optical fibers 230 may be substantially similar to optical fibers 130 seen in FIGURES 2, 3A, 3B, and 3C.

Initial coupler 250 may comprise any suitable device operable to receive the traffic in λ₁-λ₄ from either of optical fibers 230, and forward the traffic to filter 260. Initial coupler 250 includes an input from both fibers 230a and 230b. Although initial coupler 250 includes two inputs, initial coupler 250 only receives a copy of downstream traffic (λ₁-λ₄ and λᵥ) at one input because either the redundant ONU is kept in cold standby, preventing the transmission of traffic over one of the optical fibers (as seen in FIGURE 3A), or the fiber switch prevents the transmission of identical copies of downstream traffic from being transmitted to the RN (as seen in FIGURES 3B and 3C).

Filter 260 may comprise any suitable filter operable to receive a signal comprising traffic in λ₁-λ₄, and forward the traffic in λ₁-λ₄ to multiplexer 280. Filter 260 is further operable to receive traffic in λᵥ or another broadcast wavelength, and send it to primary coupler 270. In the upstream direction, filter 260 is operable to receive the traffic in λᵤ and direct it towards the OLTs.

Primary coupler 270 may comprise any suitable device operable to receive the traffic in λᵥ from filter 260. Primary coupler 270 may be operable to split downstream traffic λᵥ and forward each copy to secondary couplers 290. Although primary coupler is illustrated as a 1x4 coupler, any suitable coupler may be used. Primary coupler 270, in the upstream direction, is operable to receive traffic transmitted by ONUs over time-shared λᵤ from secondary couplers 290 and combine this traffic into one signal. Primary coupler 270 forwards the upstream signal to filter 260.

Multiplexer 280 may include any suitable multiplexer/demultiplexer and is operable to receive the signal comprising the traffic in λ₁-λ₄ and demultiplex the signal. Although in the illustrated example, multiplexer 280 is a 1x4 multiplexer, in alternative networks, multiplexer 280 may have any suitable number of ports. Also, in alternative networks, multiplexer 280 may comprise two or more separate multiplexers receiving downstream signals from one or more upstream sources and forwarding the traffic downstream such that ONUs share wavelengths. In the downstream direction, each output port of multiplexer 280 is operable to forward the traffic in a corresponding one of λ₁-λ₄ to a corresponding secondary coupler 290. In alternative embodiments, the traffic in each wavelength may be forwarded to a different secondary coupler than that illustrated, the traffic in more than one wavelength may be forwarded to a secondary coupler, and/or multiplexer 280 may receive, multiplex, and forward traffic in more or less than four downstream wavelengths.

In the upstream direction, multiplexer 280 may be operable to receive and terminate the traffic in λᵤ from the ONUs. Alternatively, multiplexer 280 may forward this traffic to filter 260 for suitable termination (where termination may be performed internally or externally).

Each secondary coupler 290 may comprise any suitable coupler operable to receive a signal from multiplexer 280, split the signal into a suitable number of copies, and forward each copy to the ONUs in a corresponding wavelength-sharing group of ONUs (each group of wavelength-sharing ONUs shares one of λ₁-λ₄ in the downstream direction). Each secondary coupler 290 is further operable to receive a signal comprising traffic in λᵥ from primary coupler 270, split the signal into a suitable number of copies, and forward each copy to the ONUS.

In the upstream direction, each secondary coupler 290 is operable to receive traffic transmitted at λᵤ from each ONU of a corresponding group of ONUs and combine the traffic from each ONU into one signal. Each secondary coupler 290 is operable to split the combined upstream traffic into two copies and forward one copy to primary coupler 270 and one copy to multiplexer 280. The copy forwarded to primary coupler 270, as described above, is combined with other traffic from other ONUs and transmitted over time-shared λᵤ. The copy forwarded to multiplexer 280 may be blocked or forwarded to filter 260 for suitable termination. Although secondary couplers 290 are illustrated as 2x4 couplers in RN 240, secondary couplers 290 may be any suitable coupler or combination of couplers (such as a 2x2 coupler coupled to two 1x2 couplers). Secondary couplers 290 may split or combine any suitable number of signals.

RN 240, in operation, receives a copy of the downstream signal (λ₁-λ₄ and λᵥ) at initial coupler 250 over either optical fiber 230a or 230b. Initial coupler 250 forwards the signal to filter 260, reducing the power of the signal in the process. For traffic in λᵥ, filter 260 forwards the downstream traffic to primary coupler 270. Primary coupler 270 splits the signal into four copies and forwards a copy to each secondary coupler 290. Each secondary coupler 290 splits the signal into a suitable number of copies. In the illustrated embodiment, each secondary coupler 290 splits the signal into four copies. Each copy is then forwarded to each ONU. For traffic in λ₁-λ₄, filter 260 forwards the downstream traffic to multiplexer 280. Multiplexer 280 receives the signal comprising the traffic in λ₁-λ₄ and demultiplexes the signal into its constituent wavelengths. Multiplexer 280 then forwards the traffic in each wavelength along a corresponding fiber such that each secondary coupler 290 receives the traffic in a corresponding one of λ₁-λ₄. Each secondary coupler 290 splits the signal into a suitable number of copies. In the illustrated embodiment, each secondary coupler 290 splits the signal into four copies. In this way, a corresponding one of λ₁-λ₄ is transmitted to and shared by one or more groups of ONUs. After secondary couplers 290 split the signal comprising the traffic in a corresponding one of λ₁-λ₄ into four copies, secondary couplers 290 forward each copy over fibers 230 such that the ONUs coupled to the secondary coupler 290 receive a copy.

In the upstream direction, each secondary coupler 290 of RN 240 receives traffic over time-shared λᵤ and combines the traffic from each ONU in the corresponding group. After receiving and combining traffic over λᵤ into one signal, each secondary coupler 290 splits the signal into two copies, forwarding one copy to multiplexer 280 and one copy to primary coupler 270. As discussed above, multiplexer 280 of example RN 240 may block or forward λᵤ to filter 260 for suitable termination. Primary coupler 270 receives traffic over λᵤ from each secondary coupler 290, combines the traffic, and forwards the traffic to filter 260. Filter 260 receives the combined traffic in λᵤ and directs the traffic toward initial coupler 250 which forwards the traffic to the OLTs.

As seen above, the conventional RN is capable of receiving downstream traffic at more than one input, and demultiplexing and/or power splitting the traffic received at each input. However, to do so, the conventional RN couples the plurality of inputs onto a single fiber using coupler 250. This coupling causes a decrease in power of the downstream signal of approximately 3 decibels (dB), which in turn causes a reduction in the power of the signal received by each ONU. As mentioned above, the operation of the RN splits the broadcast traffic in (λᵥ) in the downstream signal into N copies, whereby N is the amount of ONUs coupled to the RN. When the signal is split into N copies, the power of the signal received by each ONU is less than 1/N. As a result, each ONU receives a signal that is already weakened by at least 1/N of the original power transmitted by the OLTs. Therefore, any further reduction in power is undesirable. The present invention eliminates the need for an initial coupler in the RN. Therefore, the power of the signal received by each ONU incurs less loss than the loss associated with the initial coupler.

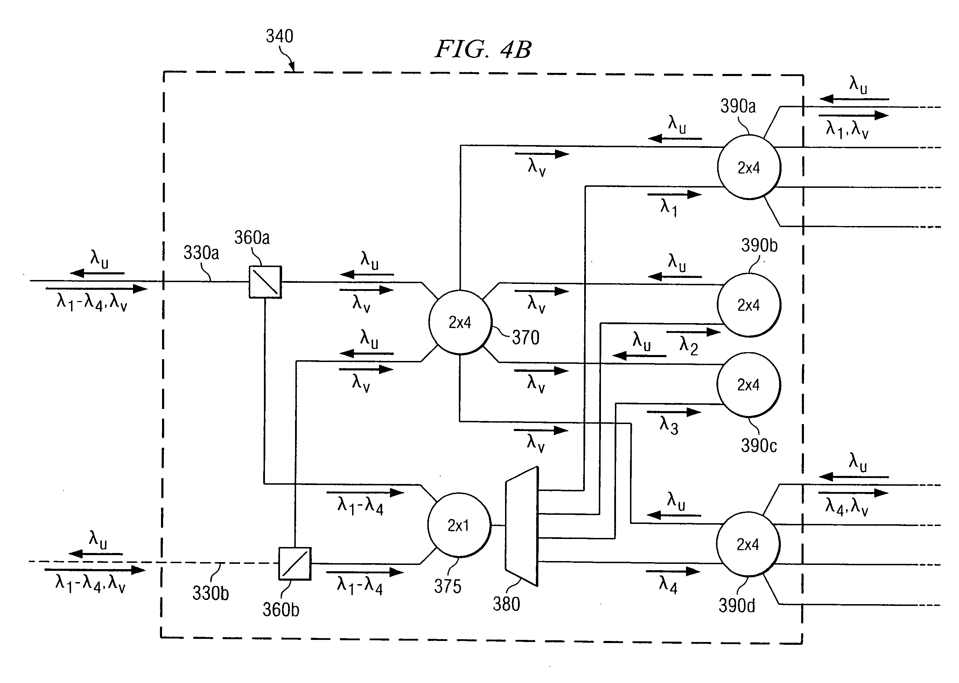

FIGURE 4B is a diagram illustrating another example alternative RN according to particular embodiments of the present invention. RN 340 may be an example of RN 140 of FIGURES 3A, 3B, and 3C. RN 340 includes a filter 360a coupled to an optical fiber 330a, and a filter 360b coupled to an optical fiber 330b. Filters 360 eliminate the need for the downstream signal with traffic in λᵥ to pass through an initial coupler before being forwarded to primary coupler 370. Thus, the downstream traffic in λᵥ does not incur the extra power loss associated with the initial coupler. RN 340 also includes primary coupler 375, multiplexer 380, and secondary couplers 390. Optical fibers 330 are substantially similar to optical fibers 130 of FIGURES 2, 3A, 3B, and 3C.

Filters 360 may comprise any suitable filter operable to receive a signal comprising traffic in λ₁-λ₄, and forward the traffic in λ₁-λ₄ to primary coupler 375 (coupled to multiplexer 380). Filter 360 is further operable to receive traffic in λᵥ or another broadcast wavelength, and send it to primary coupler 370 with a lower power loss than would occur if the traffic passed through an initial coupler. Despite having multiple filters 360, only one filter 360 receives a copy of the downstream signal because the redundant ONU is kept in cold standby, preventing the transmission of traffic over one of the optical fibers (as seen in FIGURE 3A), or the fiber switch prevents the transmission of identical copies of downstream signal from being transmitted to the RN (as seen in FIGURES 3B and 3C). In the upstream direction, filters 360 are operable to each receive the traffic in λᵤ and direct it toward the OLTs.

Primary coupler 370 is substantially similar to primary coupler 270 of FIGURE 4A. Unlike primary coupler 270, however, primary coupler 370 includes two inputs for downstream traffic. Thus, primary coupler 370 is illustrated as a 2x4 coupler. However, any suitable coupler may be used. Despite having two inputs, only one copy of downstream traffic is received at primary coupler 370, as discussed above. Multiplexer 380 is substantially similar to multiplexer 280 of FIGURE 4A. Likewise, secondary couplers 390 are substantially similar to secondary couplers 290 of FIGURE 4A.

Primary coupler 375 may comprise any suitable device operable to receive the traffic in λ₁-λ₄ from either of filters 360, and forward the traffic to multiplexer 380. Primary coupler 375 includes an input from both filters 360a and 360b. Thus, primary coupler 375 is illustrated as a 2x1 coupler. However, any suitable coupler may be used. Although primary coupler 375 includes two inputs, primary coupler 375 only receives a copy of downstream traffic λ₁-λ₄at one input, as discussed above.

Despite the fact that primary coupler 375 subjects a loss of power on the downstream signal comprising traffic in λ₁-λ₄, the loss of power for downstream traffic in λ₁-λ₄ is not as significant as an additional loss of power for downstream traffic in λᵥ. This is because downstream traffic in λ₁-λ₄ is not split into as many copies as the downstream traffic in λᵥ. For example, the downstream traffic in λᵥ is split into N copies, whereby N is the amount of ONUs. However, the downstream traffic in λ₁-λ₄ is not received by each ONU. Instead each wavelength is only received by the group of wavelength sharing ONUs associated with each wavelength. As a result, the signal is not copied for each ONU, and therefore, the power of the signal is not reduced as much as that of λᵥ. Thus, the additional loss caused by primary coupler 375 on the downstream traffic in λ₁-λ₄is not as undesirable.

RN 340, in operation, receives a copy of the downstream signal (λ₁-λ₄and λᵥ) at one filter 360 over either optical fiber 330a or 330b. The filter 360 that receives the downstream signal forwards the signal to either primary coupler 370 or primary coupler 375. For traffic in λᵥ, filter 360 forwards the downstream traffic to primary coupler 370 without subjecting the downstream traffic to a power loss. Primary coupler 370 splits the signal into four copies and forwards a copy to each secondary coupler 390. Each secondary coupler 390 splits the signal into a suitable number of copies. In the illustrated embodiment, each secondary coupler 390 splits the signal into four copies. Each copy is then forwarded to each ONU. For traffic in λ₁-λ₄, filter 360 forwards the downstream traffic to primary coupler 375. Primary coupler 375 forwards the signal to multiplexer 380. Multiplexer 380 receives the signal comprising the traffic in λ₁-λ₄ and demultiplexes the signal into its constituent wavelengths. Multiplexer 380 then forwards the traffic in each wavelength along a corresponding fiber such that each secondary coupler 390 receives the traffic in a corresponding one of λ₁-λ₄. Each secondary coupler 390 splits the signal into a suitable number of copies. In the illustrated embodiment, each secondary coupler 390 splits the signal into four copies. In this way, a corresponding one of λ₁-λ₄ is transmitted to and shared by one or more groups of ONUs. After secondary couplers 390 split the signal comprising the traffic in a corresponding one of λ₁-λ₄ into four copies, secondary couplers 390 forward each copy over fibers 330 such that the ONUs coupled to the secondary coupler 390 receive a copy.

In the upstream direction, each secondary coupler 390 of RN 340 receives traffic over time-shared λᵤ and combines the traffic from each ONU in the corresponding group. After receiving and combining traffic over λᵤ into one signal, each secondary coupler 390 splits the signal into two copies, forwarding one copy to multiplexer 380 and one copy to primary coupler 370. As discussed above, multiplexer 380 of example RN 340 may block λᵤ or forward λᵤ to filters 360 for suitable termination. Primary coupler 370 receives traffic over λᵤ from each secondary coupler 390, combines the traffic, and forwards the traffic to filters 360. Filters 360 receive the combined traffic in λᵤ and direct the traffic toward the OLTs.

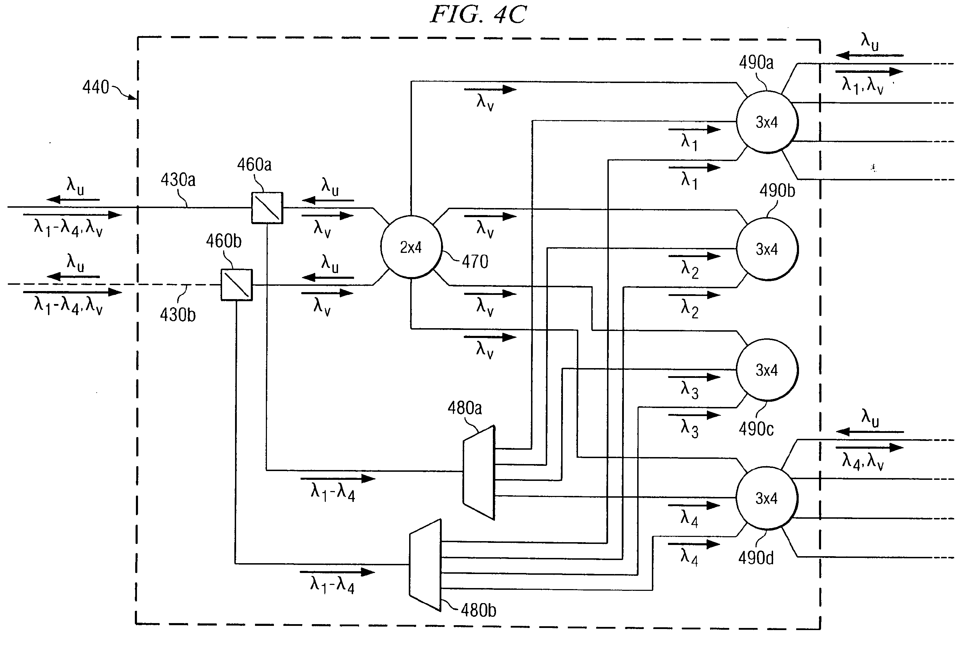

FIGURE 4C is a diagram illustrating yet another example alternative RN according to particular embodiments of the present invention. RN 440 may be an example of RN 140 of FIGURES 3A, 3B, and 3C. RN 440 includes a filter 460a coupled to an optical fiber 430a, and a filter 460b coupled to an optical fiber 430b. Like RN 340 of FIGURE 4C, filters 460 eliminate the need for the downstream signal with traffic in λᵥ to pass through an initial coupler before being forwarded to primary coupler 470. Unlike RN 340 of FIGURE 4C, RN 440 also includes a multiplexer 480a coupled to filter 460a, and a multiplexer 480b coupled to filter 460b. Multiplexers 480 eliminate the need for the downstream signal with traffic in λ₁-λ₄ to pass through a primary coupler (such as coupler 375 of FIGURE 4B) before being forwarded to multiplexers 480. Thus, the downstream signal (with traffic in both λᵥ and λ₁-λ₄) does not incur extra power loss associated with such a coupler.

Optical fibers 430 are substantially similar to optical fibers 130 of FIGURES 2, 3A, 3B, and 3C. Filters 460 are substantially similar to filters 360 of FIGURE 4B. Primary coupler 470 is substantially similar to primary coupler 370 of FIGURE 4B.

Multiplexers 480 are substantially similar to multiplexers 380 of FIGURE 4B. However, RN 440 includes multiple multiplexers 480. As a result, the downstream signal with traffic in λ₁-λ₄ does not have to pass through a primary coupler (as seen in FIGURE 4B) and therefore, the downstream signal with traffic in λ₁-λ₄ is not subjected to the power loss associated with such a coupler.

RN 440 also includes secondary couplers 490. Secondary couplers 490 are substantially similar to secondary couplers 290 and 390 of FIGURES 4A and 4B. However, instead of only having two downstream inputs, secondary couplers 490 include three downstream inputs. Thus, secondary couplers 490 are illustrated as 3x4 couplers. Despite the illustration, any other suitable coupler may be used.

RN 440, in operation, receives a copy of the downstream signal (λ₁-λ₄ and λᵥ) at one filter 460 over either optical fiber 430a or 430b. The filter 460 that receives the downstream signal forwards the signal to either primary coupler 470 or to either multiplexer 480a or 480b. As a result, the downstream signal with traffic in both λᵥ and λ₁-λ₄ does not incur a reduction in power. For traffic in λᵥ, filter 460 forwards the downstream traffic to primary coupler 470. Primary coupler 470 splits the signal into four copies and forwards a copy to each secondary coupler 490. Each secondary coupler 490 splits the signal into a suitable number of copies. In the illustrated embodiment, each secondary coupler 490 splits the signal into four copies. Each copy is then forwarded to each ONU. For traffic in λ₁-λ₄, filter 460 forwards the downstream traffic to the multiplexer 480 it is coupled with. Multiplexer 480 receives the signal comprising the traffic in λ₁-λ₄ and demultiplexes the signal into its constituent wavelengths. Multiplexer 480 then forwards the traffic in each wavelength along a corresponding fiber such that each secondary coupler 490 receives the traffic in a corresponding one of λ₁-λ₄. Each secondary coupler 490 splits the signal into a suitable number of copies. In the illustrated embodiment, each secondary coupler 490 splits the signal into four copies. In this way, a corresponding one of λ₁-λ₄ is transmitted to and shared by one or more groups of ONUs. After secondary couplers 490 split the signal comprising the traffic in a corresponding one of λ₁-λ₄ into four copies, secondary couplers 490 forward each copy over fibers 430 such that the ONUs coupled to the secondary coupler 490 receive a copy.

In the upstream direction, each secondary coupler 490 of RN 440 receives traffic over time-shared λᵤ and combines the traffic from each ONU in the corresponding group. After receiving and combining traffic over λᵤ into one signal, each secondary coupler 490 splits the signal into three copies, forwarding one copy to multiplexer 480a, one copy to multiplexer 480b, and one copy to primary coupler 470. As discussed above, each multiplexer 480 of example RN 440 may block λᵤ or forward λᵤ to filters 460 for suitable termination. Primary coupler 470 receives traffic over λᵤ from each secondary coupler 490, combines the traffic, and forwards the traffic to filters 460. Filters 460 receive the combined traffic in λᵤ and direct the traffic toward the OLTs.

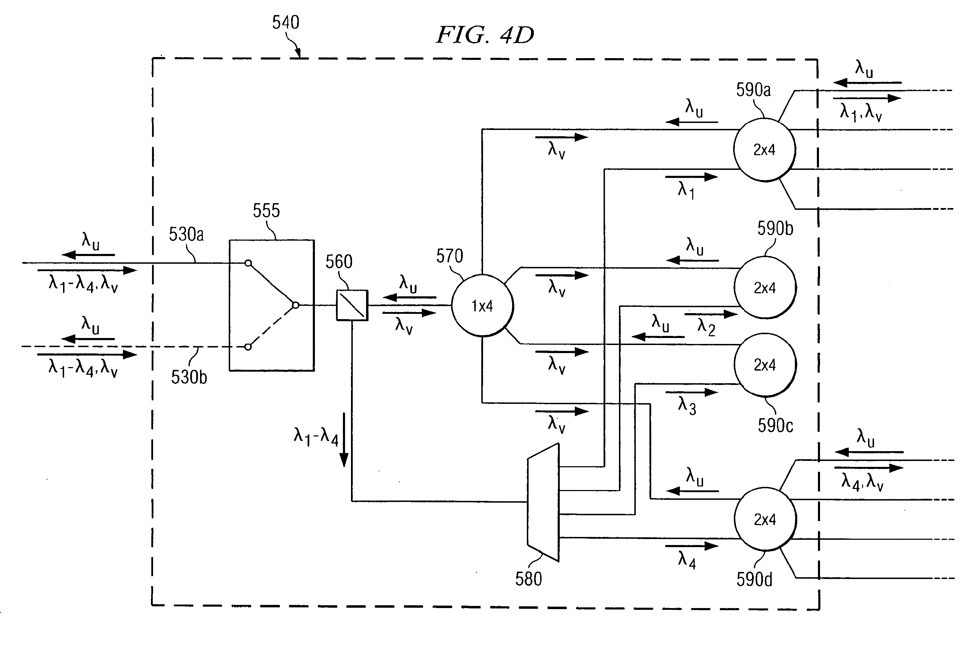

FIGURE 4D is a diagram illustrating yet another example alternative RN according to particular embodiments of the present invention. RN 540 may be an example of RN 140 of FIGURES 3A, 3B, and 3C. RN 540 may replace RN 240 of FIGURE 4A. RN 540 includes a RN switch 555 that designates which optical fiber 530 is coupled to filter 560. RN switch 555 eliminates the need for the downstream signal (in both λᵥ and λ₁-λ₄) to pass through an initial coupler before being forwarded to filter 560. Thus, the downstream signal (in λᵥ and λ₁-λ₄) does not incur the extra power loss associated with such a coupler, but only the loss associated with a practical switch 555, which is significantly less. RN 540 also includes a primary coupler 570, a multiplexer 580, and secondary couplers 590. Optical fibers 530 may be substantially similar to optical fibers 130 of FIGURES 2, 3A, 3B, and 3C.

RN switch 540 may include any suitable switch operable to select the signal from one of the optical fibers 530a and 530b to be forwarded to filter 560. Although RN switch 540 includes multiple inputs, it only includes one coupling to filter 560. Thus, according to the illustrated embodiment, filter 560 receives traffic from only one of the optical fibers 530. In another embodiment, RN switch 540 may replace fiber switch 134 of FIGURE 3C. As a result, RN 540 may receive traffic at both active fibers 530 and select which traffic to forward to filter 560.

Filter 560 is substantially similar to filter 260 of FIGURE 4A. Primary coupler 570 is substantially similar to primary coupler 270 of FIGURE 4A. Multiplexer 580 is substantially similar to multiplexer 280 of FIGURE 4A. Secondary couplers 490 are substantially similar to secondary couplers 290 of FIGURE 4A.

RN 540, in operation, receives a copy of the downstream signal (λ₁-λ₄ and λᵥ) at RN switch 555 over either optical fiber 530a or 530b. RN switch 555 selects a signal from one of the optical fibers 530. As a result, filter 560 only receives an input from one optical fiber 530. The use of such a switch eliminates the need for an initial coupler (as in FIGURES 4A and 4B) and/or the need for two filters and two multiplexers (as in FIGURE 4C). Filter 560 receives the downstream signal from RN switch 555. For traffic in λᵥ, filter 560 forwards the downstream traffic to primary coupler 570. Primary coupler 570 splits the signal into four copies and forwards a copy to each secondary coupler 590. Each secondary coupler 590 splits the signal into a suitable number of copies. In the illustrated embodiment, each secondary coupler 590 splits the signal into four copies. Each copy is then forwarded to each ONU. For traffic in λ₁-λ₄, filter 560 forwards the downstream traffic to multiplexer 580. Multiplexer 280 receives the signal comprising the traffic in λ₁-λ₄ and demultiplexes the signal into its constituent wavelengths. Multiplexer 580 then forwards the traffic in each wavelength along a corresponding fiber such that each secondary coupler 590 receives the traffic in a corresponding one of λ₁-λ₄. Each secondary coupler 590 splits the signal into a suitable number of copies. In the illustrated embodiment, each secondary coupler 590 splits the signal into four copies. In this way, a corresponding one of λ₁-λ₄ is transmitted to and shared by one or more groups of ONUs. After secondary couplers 590 split the signal comprising the traffic in a corresponding one of λ₁-λ₄ into four copies, secondary couplers 590 forward each copy over fibers 530 such that the ONUs coupled to the secondary coupler 590 receive a copy.

In the upstream direction, each secondary coupler 590 of RN 540 receives traffic over time-shared λᵤ and combines the traffic from each ONU in the corresponding group. After receiving and combining traffic over λᵤ into one signal, each secondary coupler 590 splits the signal into two copies, forwarding one copy to multiplexer 580 and one copy to primary coupler 570. As discussed above, multiplexer 580 of example RN 540 may block or forward λᵤ to filter 560 for suitable termination. Primary coupler 570 receives traffic over λᵤ from each secondary coupler 590, combines the traffic, and forwards the traffic to filter 560. Filter 560 receives the combined traffic in λᵤ and directs the traffic toward RN switch 555. RN switch 555 forwards the traffic to the OLTs.

Although embodiments of the invention and its advantages are described in detail, a person skilled in the art could make various alterations, additions, and omissions without departing from the spirit and scope of the present invention as defined by the appended claims.

## Claims

1. A method for distributing traffic in a distribution node in an optical network, the optical network comprising one or more upstream terminals, the distribution node, and a plurality of downstream terminals, the method comprising:
receiving wavelength division multiplexed (WDM) traffic in a plurality of wavelengths at at least one of a plurality of filters at the distribution node from at least one of the one or more upstream terminals, wherein each of the filters is coupled to one or more of the upstream terminals by a plurality of separate fibers;
separating traffic in a first set of one or more wavelengths from traffic in a second set of one or more wavelengths at the filter;
routing the traffic in the first set of wavelengths for distribution to all downstream terminals; and
routing the traffic in each wavelength of the second set of wavelengths for distribution to a particular subset of the downstream terminals.

2. The method of Claim 1, wherein routing the traffic in each wavelength of the second set of wavelengths for distribution to a particular subset of the downstream terminals comprises:
forwarding the traffic in the second set of wavelengths to a wavelength router from at least one of the plurality of filters;
separating a plurality of wavelengths in the second set using the wavelength router; and
routing the traffic in each wavelength of the second set of wavelengths for distribution to a particular subset of the downstream terminals.

3. The method of Claim 1, wherein routing the traffic in each wavelength of the second set of wavelengths for distribution to a particular subset of the downstream terminals comprises:
forwarding traffic in the second set of wavelengths to at least one of a plurality of wavelengths routers;
separating a plurality of wavelengths in the second set using the wavelength router; and
routing the traffic in each wavelength of the second set of wavelengths for distribution to a particular subset of the downstream terminals.

4. The method of Claim 2, wherein routing the traffic in the first set of wavelengths for distribution to all downstream terminals comprises:
splitting the traffic in the first set into a plurality of copies;
forwarding the copies for distribution to all downstream terminals.

5. The method of Claim 3, wherein routing the traffic in the first set of wavelengths for distribution to all downstream terminals comprises:
splitting the traffic in the first set into a plurality of copies;
forwarding the copies for distribution to all downstream terminals.

6. The method of Claim 1, wherein routing the traffic in the first set of wavelengths for distribution to all downstream terminals comprises:
splitting the traffic in the first set into a plurality of copies;
forwarding the copies for distribution to all downstream terminals.

7. The method of Claim 2, further comprising:
receiving the traffic in the first set of wavelengths;
receiving traffic in each wavelength of the second set of wavelengths;
splitting the traffic in the first set of wavelengths into a plurality of second copies of the traffic in the first set;
splitting the traffic in each wavelength of the second set of wavelengths into a plurality of second copies of the traffic in each wavelength of the second set;
distributing the second copies of the first set to all downstream terminals; and
distributing the second copies of the traffic in each wavelength of the second set to a particular subset of the downstream terminals.

8. A method for distributing traffic in a distribution node in an optical network, the optical network comprising one or more upstream terminals, the distribution node, and a plurality of downstream terminals, the method comprising:
receiving wavelength division multiplexed (WDM) traffic in a plurality of wavelengths at a switch at the distribution node from at least one of the one or more upstream terminals, wherein the switch is coupled to the one or more upstream terminals by a plurality of separate fibers;
selecting WDM traffic from one of the fibers to be forwarded to a filter;
separating traffic in a first set of one or more wavelengths from traffic in a second set of one or more wavelengths at the filter;
routing the traffic in the first set of wavelengths for distribution to all downstream terminals; and
routing the traffic in each wavelength of the second set of wavelengths for distribution to a particular subset of the downstream terminals.

9. The method of Claim 8, wherein routing the traffic in each wavelength of the second set of wavelengths for distribution to a particular subset of the downstream terminals comprises:
forwarding the traffic in the second set of wavelengths to a wavelength router from the filter;
separating a plurality of wavelengths in the second set using the wavelength router;
routing the traffic in each wavelength of the second set of wavelengths for distribution to a particular subset of the downstream terminals.

10. The method of Claim 8, wherein routing the traffic in the first set of wavelengths for distribution to all downstream terminals comprises:
splitting the traffic in the first set into a plurality of copies;
forwarding the copies for distribution to all downstream terminals.

11. The method of Claim 8, further comprising:
receiving the traffic in the first set of wavelengths;
receiving traffic in each wavelength of the second set of wavelengths;
splitting the traffic in the first set of wavelengths into a plurality of second copies of the traffic in the first set;
splitting the traffic in each wavelength of the second set of wavelengths into a plurality of second copies of the traffic in each wavelength of the second set;
distributing the second copies of the first set to all downstream terminals; and
distributing the second copies of the traffic in each wavelength of the second set to a particular subset of the downstream terminals.

12. A distribution node in an optical network, the optical network comprising one or more upstream terminals, the distribution node, and a plurality of downstream terminals, the distribution node comprising:
a plurality of filters coupled to one or more of the upstream terminals by a plurality of separate fibers, each filter operable to:
receive wavelength division (WDM) traffic in a plurality of wavelengths, wherein only one of the plurality of filters receives the WDM traffic at any given time; and
separate received traffic in a first set of one or more wavelengths from traffic in a second set of one or more wavelengths;
a first primary coupler coupled to each of the filters, the first primary coupler operable to receive the traffic in the first set of wavelengths and route the traffic in the first set of wavelengths for distribution to all downstream terminals; and
a distribution system coupled to each of the filters, the distribution system operable to receive the traffic in the second set of wavelengths and route the traffic in each wavelength of the second set of wavelengths for distribution to a particular subset of the downstream terminals.

13. The distribution node of Claim 12, wherein the distribution system comprises:
a second primary coupler coupled to each of the filters and operable to:
receive traffic in the second set of wavelengths from one of the filters; and
forward the traffic in the second set of wavelengths to a wavelength router; and
the wavelength router coupled to the second primary coupler and operable to:
separate a plurality of wavelengths in the second set; and
route the traffic in each wavelength of the second set of wavelengths for distribution to a particular subset of the downstream terminals.

14. The distribution node of Claim 12, wherein the distribution system comprises:
a plurality of wavelength routers, each wavelength router coupled to one of the filters, each wavelength router operable:
separate a plurality of wavelengths in the second set of wavelengths; and
route the traffic in each wavelength of the second set of wavelengths for distribution to a particular subset of the downstream terminals; and
wherein only one of the plurality of wavelength routers receives the traffic in the second set of wavelengths at any given time.

15. The distribution node of Claim 13, wherein the first primary coupler is operable to:
split the traffic in the first set of wavelengths into a plurality of copies; and
forward the copies for distribution to all downstream terminals.

16. The distribution node of Claim 14, wherein the first primary coupler is operable to:
split the traffic in the first set of wavelengths into a plurality of copies; and
forward the copies for distribution to all downstream terminals.

17. The distribution node of Claim 12, wherein the first primary coupler is operable to:
split the traffic in the first set of wavelengths into a plurality of copies; and
forward the copies for distribution to all downstream terminals.

18. The distribution node of Claim 12, further comprising a plurality of secondary couplers, each secondary coupler coupled to the first primary coupler and to the distribution system, each secondary coupler operable to:
receive the traffic in the first set of wavelengths;
receive the traffic in each wavelength of the second set of wavelengths;
split the traffic in the first set of wavelengths into a plurality of second copies of the traffic in the first set;
split the traffic in each wavelength of the second set of wavelengths into a plurality of second copies of the traffic in each wavelength of the second set;
distribute the second copies of the first set to all downstream terminals; and
distribute the second copies of the traffic in each wavelength of the second set to a particular subset of the downstream terminals.

19. A distribution node in an optical network, the optical network comprising one or more upstream terminals, the distribution node, and a plurality of downstream terminals, the distribution node comprising:
a switch coupled to one or more of the upstream terminals by a plurality of separate fibers, the switch operable to:
receive wavelength division (WDM) traffic in a plurality of wavelengths; and
select WDM traffic from one of the fibers to be forwarded to a filter;
a filter coupled to the switch, the filter operable to:
receive the selected WDM traffic; and
separate traffic in a first set of one or more wavelengths from traffic in a second set of one or more wavelengths;
a primary coupler coupled to the filter, the primary coupler operable to receive the traffic in the first set of wavelengths and route the traffic in the first set of wavelengths for distribution to all downstream terminals; and
a wavelength router coupled to the filter, the wavelength router operable to receive the traffic in the second set of wavelengths and route the traffic in each wavelength of the second set of wavelengths for distribution to a particular subset of the downstream terminals.

20. The distribution node of Claim 19, wherein the wavelength router is operable to:
receive the traffic in the second set of wavelengths;
separate a plurality of wavelengths in the second set of wavelengths; and
route the traffic in each wavelength of the second set of wavelengths for distribution to a particular subset of the downstream terminals.

21. The distribution node of Claim 19, wherein the primary coupler is operable to:
receive the traffic in the first set of wavelengths;
split the traffic in the first set of wavelengths into a plurality of copies; and
forward the copies for distribution to all downstream terminals.

22. The distribution node of Claim 19, further comprising a plurality of secondary couplers, each secondary coupler coupled to the primary coupler and to the wavelength router, each secondary coupler operable to:
receive the traffic in the first set of wavelengths;
receive the traffic in each wavelength of the second set of wavelengths;
split the traffic in the first set of wavelengths into a plurality of second copies of the traffic in the first set;
split the traffic in each wavelength of the second set of wavelengths into a plurality of second copies of the traffic in each wavelength of the second set;
distribute the second copies of the first set to all downstream terminals; and
distribute the second copies of the traffic in each wavelength of the second set to a particular subset of the downstream terminals.
